# EUROPEAN PATENT APPLICATION

(11) **EP 4 765 536 A1**
(43) Date of publication of application: **24.06.2026**
(21) Application number: 24220519.3
(22) Date of filing: 17.12.2024
(51) Int. Cl.: H02H 11/00

(54) **REVERSE POLARITY PROTECTION**

(71) Applicant: Veoneer Sweden Safety Systems AB, 10302 Stockholm (SE)
(72) Inventor: FOUILLEUL, Antoine, 95800 Cergy-Pontoise (FR)
(74) Representative: Reichert & Lindner Partnerschaft Patentanwälte

(57) **Abstract**

In a circuit (3) a MOSFET (14) is used for protecting a load (18) against wrong polarity of a power source (11) for the circuit (3). A driver (15) for the MOSFET (14) is configured to generate a pre-defined voltage drop between source (141) and drain (142) of the MOSFET (14) at correct polarity of power source (11). If wrong polarity of power source (11) is detected, driver (15) sets MOSFET (14) into a state of high resistance between source (141) and drain (142). The pre-defined voltage drop at correct polarity is associated with a resistance between source (141) and drain (142) which makes detection of wrong polarity more reliable.

## Description

The invention relates to circuits with reverse voltage protection, as may for example be used to supply ECUs in the automotive sector. More specifically, the invention relates to circuits employing a MOSFET for reverse voltage protection.

In many electronic circuits, for example in, but not limited to, the automotive sector, devices such as ECUs need to be protected against wrong polarity of an input voltage of such a device (reverse polarity protection). The use of a dedicated diode for this purpose is well known.

Electronic circuits nowadays can be quite complex, including many components. During operation, voltage drops may occur at such components. Even for diodes as just discussed for protecting against wrong polarity the voltage drop across the diode in forward direction, i.e., at correct polarity, can be significant, for example about 0.7 V. This voltage drop may be a problem for some loads to be supplied within or via the circuit, even more so if voltage drops from several components add up. Furthermore, at such components heat is generated, which not only implies a loss of energy, but sometimes also the need for cooling.

It is known to use a MOSFET with corresponding driver instead of a diode, in order to overcome the aforementioned disadvantages. The basic principle here is to drive the gate of the MOSFET in such a way that at correct polarity of the input voltage (from a power source, for example), the MOSFET behaves as a closed switch, i.e., lets current pass from source to drain at low resistance, implying a voltage drop considerably smaller than a voltage drop across a diode in the same situation. Likewise, heat generation is reduced compared with the diode case. At wrong polarity, the gate is correspondingly driven such that the MOSFET acts as an open switch, blocking the passage of current from source to drain. Furthermore, in comparison to diodes commonly used for reverse voltage protection, a MOSFET can efficiently block current even at high voltages of wrong polarity.

To function as a properly improved diode, the MOSFET must be in an open, i.e., blocking state, at wrong polarity. Detecting this wrong polarity by measuring the voltage drop between source and drain of the MOSFET, while the MOSFET is still in a closed state, can be problematic, as the resistance of the MOSFET is rather small in the closed state. Therefore, the voltage drop between source and drain is small. This small voltage drop, which above has been mentioned as an advantage while the circuit is operating at correct polarity, is disadvantageous for detecting wrong polarity, as it is difficult to detect or measure. Here it should be taken into account that these detections / measurements have to be done on wide overall voltage ranges and large temperature ranges.

It is an object of the invention to improve the reliability of wrong polarity detection in circuits employing a MOSFET for protection against wrong polarity.

This object is achieved by a circuit according to claim 1. The dependent claims refer to advantageous embodiments.

The circuit according to the invention is for supplying a load from a power source to be connected to the circuit, while protecting this load against wrong polarity of the power source.

The circuit includes a MOSFET and a driver for the MOSFET. The MOSFET is connected in the circuit such that current from a connected power source, intended to supply the load, passes towards the load via the MOSFET's source and drain.

According to the invention, the driver is configured to drive a gate of the MOSFET in such a way that a resistance between source and drain of the MOSFET is established which is associated with a pre-defined voltage drop between source and drain if the power source is connected at correct polarity. In this case, the MOSFET acts as a closed switch with a resistance that may still be smaller than for a typical diode under forward-bias. The driver is furthermore configured to drive the gate in such a way that the resistance between source and drain is set to a high value in case the power source is connected at wrong polarity. In this case, the MOSFET acts as an open switch.

The advantage here is that the pre-defined voltage drop can be set to be sufficiently high for easy detection at wrong polarity of the power source, while at the same time being still low enough not to adversely affect the operation of the circuit or load at correct polarity of the power source. As a non-limiting example, the voltage drop may be set to 100 mV, while without the inventive measures the voltage drop under otherwise identical operating conditions would be only 5 mV.

Put somewhat differently, the driver drives the gate of the MOSFET in such a way that in a closed state of the MOSFET, which corresponds to the normal operating state of the MOSFET at correct polarity of the power source, the voltage drop at the MOSFET at wrong polarity of the power source is high enough to be detected by the driver. This means the voltage drop at wrong polarity of the power source but closed state of the MOSFET is high enough to cause the driver to control the gate of the MOSFET in such a way that the MOSFET switches to a state of high resistance between its source and drain, i.e., to the open state.

The driver may include a comparator or difference amplifier.

In an embodiment, the driver is connected to common ground via an additional MOSFET which blocks current losses at low current.

Below, the invention and its advantages will be described with reference to the accompanying schematic figures.
- Figure 1: illustrates the basic known concept of using a diode for reverse voltage protection.
- Figure 2: illustrates using a MOSFET for reverse voltage protection.
- Figure 3: shows a circuit according to the invention.
- Figure 4: shows a specific example configuration of a MOSFET with driver according to the invention.
- Figure 5: shows a further specific example configuration of a MOSFET with driver according to the invention.

The figures only show examples of circuits implementing the invention and are not to be taken as a limitation of the invention to the examples shown.

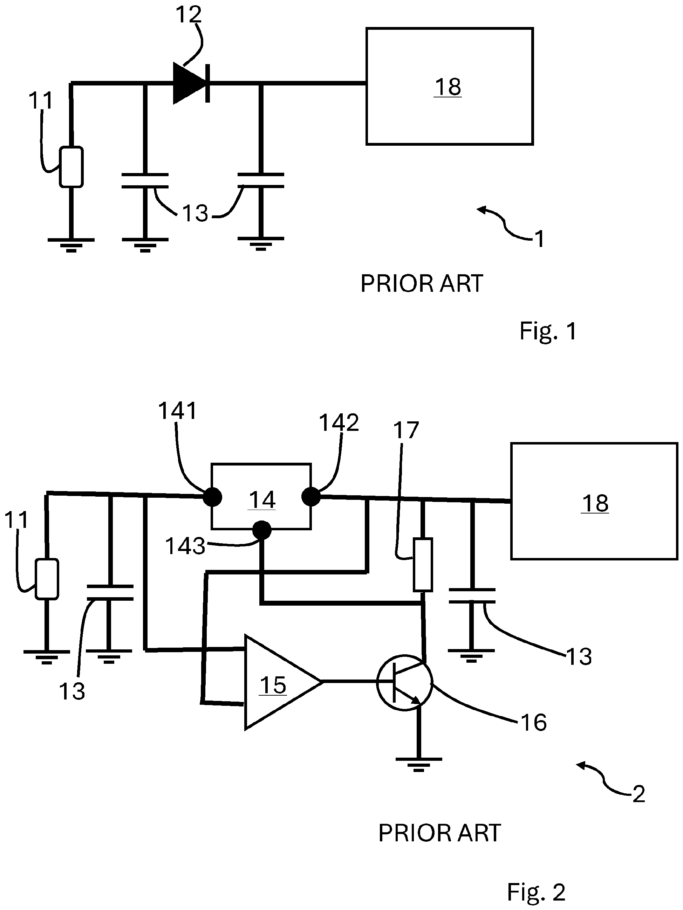

**Fig. 1** illustrates the known concept of using a diode 12 for protecting against wrong polarity of a power source 11 in a circuit 1 (reverse polarity protection). Circuit 1 is to supply a load 18 from power source 11. If power source 11 is connected at correct polarity, diode 12 is forward-biased, i.e., lets current pass at a comparatively low resistance. If power source 11 is connected at wrong polarity, diode 12 is reverse-biased, i.e., exhibits a resistance far higher than in the forward-biased case, effectively blocking current from the power source 11. Or, somewhat more precisely, letting pass only a very small current and showing a high voltage drop at the diode 12, so that the voltage remaining for load 18 and the current reaching load 18, even if of wrong polarity, are so small that no damage is done to load 18. Sections of circuit 1 are connected to common ground by capacitances 13.

**Fig. 2** shows the known concept of using a MOSFET 14 instead of a diode for reverse polarity protection. Circuit 2 serves to supply a load 18 from power source 11 connected to circuit 2. The current from power source 11 passes through source 141 and drain 142 of MOSFET 14. A driver 15 for the MOSFET 14 switches a transistor 16 between an "open" state, in which transistor 16 can approximately be considered an open switch, not allowing current to pass through, and a "closed" state, in which transistor 16 can approximately be considered a closed switch, allowing current to pass through. The driver 15 performs the switching depending on the voltage drop between source 141 and drain 142 of MOSFET 14. Sections of circuit 2 are connected to common ground by capacitances 13.

At correct polarity of power source 11, driver 15 sets transistor 16 to a closed state, allowing current to flow through resistor 17 and transistor 16. The associated voltage drop at resistor 17 leads to a voltage at gate 143 of MOSFET 14 which sets MOSFET 14 to a state of low resistance, letting current pass to load 18 with only a small voltage drop between source 141 and drain 142 at MOSFET 14. In this case, MOSFET 14 mimics a forward-biased diode.

At wrong polarity of power source 11, driver 15 sets transistor 16 to an open state, effectively blocking current flow through resistor 17 and transistor 16. The associated voltage drop at resistor 17 leads to a voltage at gate 143 of MOSFET 14 which is not sufficient to set MOSFET 14 to a state of low resistance. Therefore, only a very small current can pass to load 18 and the voltage drop between source 141 and drain 142 at MOSFET 14 is high. In this case, the MOSFET 14 mimics a reverse-biased diode.

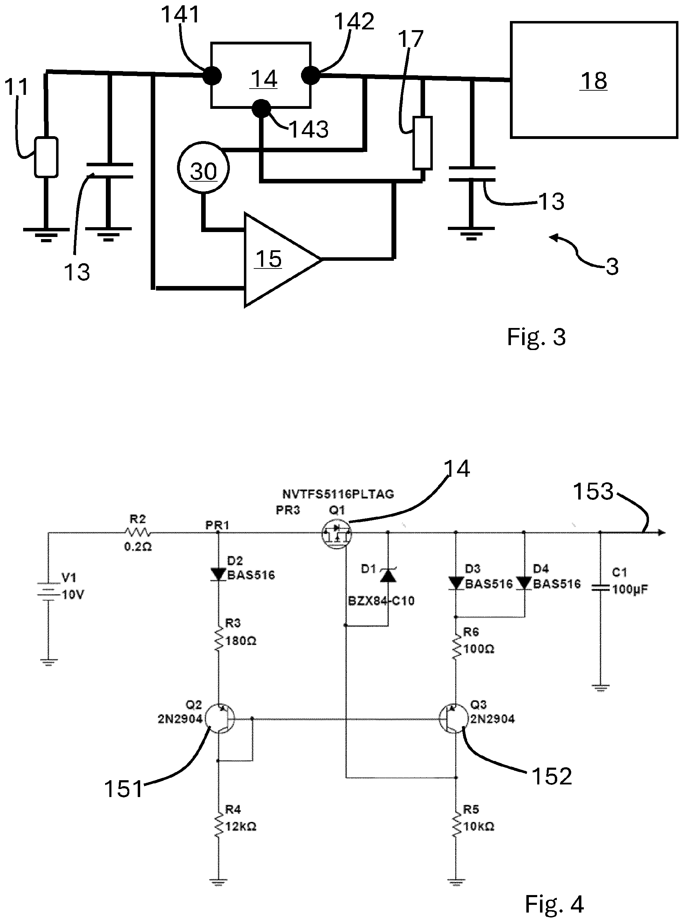

**Fig. 3** shows a circuit 3 according to the invention. A power source 11 is shown connected to circuit 3. Load 18 is to be supplied from power source 11. Sections of circuit 3 are connected to common ground by capacitances 13. Current from power source 11 to load 18 passes via source 141 and drain 142 of MOSFET 14. Driver 15 controls the voltage at gate 143 in such a way that a resistance between source 141 and drain 142 is set to such a value that a pre-defined voltage drop occurs between source 141 and drain 142 at correct polarity of power source 11. This pre-defined voltage drop can be set via bias control 30. For correct polarity of power source 11 MOSFET 14 mimics a forward-biased diode. If wrong polarity of power source 11 is detected, driver 15 sets MOSFET 14 into a state of high resistance between source 141 and drain 142, so that MOSFET 14 mimics a reverse-biased diode.

The pre-defined voltage drop, or associated resistance, between source 141 and drain 142 of MOSFET 14 is chosen small enough not to affect proper operation of circuit 3 or load 18 at correct polarity of power source 11, but high enough so that it can be easily detected at wrong polarity of power source 11, before the MOSFET 14 is switched into the state of high resistance.

**Fig. 4** shows a very specific setup according to the invention for MOSFET 14 with driver. The function of driver 15 in circuit 3 of Fig. 3 is accomplished here mainly by transistors 151 and 152 along with their interconnectedness. Arrow 153 indicates the electric connection to further parts of circuitry in which the setup shown is used.

The setup shown in Fig. 4 is a possible implementation of the concept of the invention using a plurality of discrete electronic components. Alternatively, the concept of the invention could also be implemented, for example, using an integrated circuit or an ASIC component.

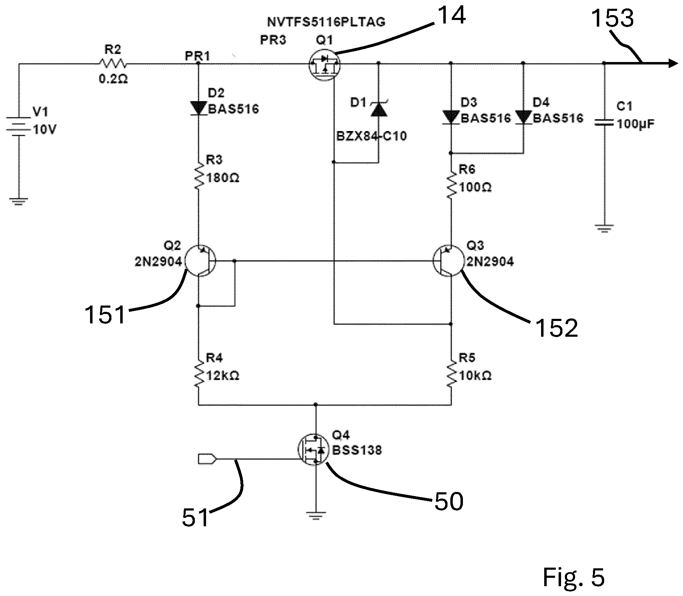

**Fig. 5** shows a variant of the setup shown in Fig. 4. Here a MOSFET 50 has been added, the gate of which is controlled by a current 51, and which blocks losses at low current situations, e.g., when the circuit is effectively turned off. Put somewhat differently, in case of an automotive application of the invention, MOSFET 50 is used to avoid current consumption ("leakage") from the vehicle battery when the system is in a "sleep" state. The MOSFET 50 cuts the polarization current arising from the reverse voltage protection. The current 51 driving MOSFET 50 can for example be implemented as a signal from an onboard microcontroller of the vehicle.

### List of Reference Signs

- 1: circuit
- 2: circuit
- 3: circuit
- 11: power source
- 12: diode
- 13: capacitance
- 14: MOSFET
- 15: driver (for MOSFET)
- 16: transistor
- 17: resistor
- 18: load
- 30: bias control
- 50: MOSFET
- 51: current
- 141: source
- 142: drain
- 143: gate
- 151: transistor
- 152: transistor
- 153: arrow

## Claims

1. Circuit (3) for supplying a load (18), including
a MOSFET (14);
a driver (15) for the MOSFET (14);
**characterized in that**
the driver (15) is configured
to drive a gate (143) of the MOSFET (14) in such a way that a resistance between source (141) and drain (142) of the MOSFET (14) is established which is associated with a pre-defined voltage drop between source (141) and drain (142) if a power source (11) for circuit (3) and load (18) is connected at correct polarity;
to drive the gate (143) in such a way that the resistance between source (141) and drain (142) is set to a high value in case the power source (11) is connected at wrong polarity.

2. Circuit (3) according to claim 1, wherein the driver (15) includes a comparator or a difference amplifier.

3. Circuit (3) according to claim 1 or 2, wherein the driver (15) is connected to common ground via an additional MOSFET (50).
